# EUROPEAN PATENT SPECIFICATION

(11) **EP 1 864 471 B1**
(45) Date of publication and mention of the grant of the patent: **26.09.2012**
(21) Application number: 06739051.8
(22) Date of filing: 21.03.2006
(51) Int. Cl.: H04L 29/06

(54) **METHODS AND DEVICES FOR DEFENDING A 3G WIRELESS NETWORK AGAINST A SIGNALING ATTACK**
VERFAHREN UND VORRICHTUNGEN ZUR VERTEIDIGUNG EINES DRAHTLOSEN 3G-NETZES VOR SIGNALISIERUNGSANGRIFFEN
PROCEDES ET DISPOSITIFS POUR DEFENDRE UN RESEAU SANS FIL 3G CONTRE UNE ATTAQUE DE SIGNALISATION

(30) Priority: 31.03.2005 US 94416
(43) Date of publication of application: 12.12.2007
(73) Proprietor: Alcatel Lucent, 75007 Paris (FR)
(72) Inventor: NORDEN, Samphel, Edison, New Jersey 08817 (US); BU, Tian, St. Louis, Missouri 63112 (US); WOO, Thomas, Y., Short Hills, New Jersey 07078 (US)
(74) Representative: Sarup, David Alexander
(86) International application number: PCT/US2006/010108
(87) International publication number: WO 2006/104752

(56) References cited:
- US-A1- 2003 217 283
- YIH HUANG ET AL: "Countering denial-of-service attacks using congestion triggered packet sampling and filtering" COMPUTER COMMUNICATIONS AND NETWORKS, 2001. PROCEEDINGS. TENTH INTERNATIONAL CONFERENCE ON 15-17 OCT. 2001, PISCATAWAY, NJ, USA,IEEE, 15 October 2001 (2001-10-15), pages 490-494, XP010562136 ISBN: 0-7803-7128-3

## Description

### BACKGROUND OF THE INVENTION

Denial of Service (DoS) attacks continue to present a significant challenge. In fact, the frequency and magnitude of attacks in the Internet have been steadily increasing. There have been a number of well-publicized attacks such as the February, 2000 attack on popular Web sites that included Yahoo, CNN, EBay, etc., and the recent attacks on root DNS servers.

DoS attacks typically involve sending a large volume of traffic to a node that exceeds its processing capability, in effect knocking the afflicted node out of the network for the duration of the attack. A more sophisticated attack is a Distributed DoS attack (DDoS).

An attacker intending to launch a DDoS attack begins by subverting a number of nodes, using well-known security loopholes. These compromised nodes essentially become slaves of the attacker and act as launch points to inject traffic into the network. By summoning a reasonable number of compromised nodes, an attacker can potentially launch a large-scale, network wide attack by cascading the traffic from multiple launch points.

A large variety of solutions have been proposed to counter DoS attacks. The current state-of-the-art in defending against DoS attacks include firewalls (Cisco's PIX router, Netscreen, Checkpoint's Firewall-1 are some examples), router modifications to support pushback, traceback mechanisms that attempt to detect the source of the attack, and related intrusion detection mechanisms that look for anomalies or signatures in arriving traffic. Some of these approaches require significant changes to existing network elements, and are costly to deploy, while others require collaboration across ISPs, and thus may be impractical. Nonetheless, these schemes do reduce the threat of wireline DoS attacks. For example, most firewalls do not allow connections to be initiated from outside, thus preventing DoS flooding attacks.

Wireless networks on the other hand are significantly more fragile than wireline networks. There are several vulnerabilities in wireless networks that can be exploited by novel DoS attacks:
- **Limited wireless link bandwidth:** The scarcity of resources combined with the low capacity of a wireless link makes it an easy target of a DoS attack. In fact, the attacker's job is made even easier than in the wireline case because it takes significantly less traffic (i.e., relatively low volume) to overload a wireless link. In addition, the relatively low volume of traffic makes it difficult to detect a wireless DoS attack.
- **Processing Overhead:** A typical 3G1x or UMTS network has several infrastructure elements that perform a host of functions such as power control, resource allocation, paging, etc. A radio network controller (RNC) and base stations are involved in these activities for each mobile. With fast handoff, the overhead required by these devices is tremendous. Furthermore, such devices are typically engineered to handle a load with a certain number of users being simultaneously active. Overload, therefore, is a significant concern for any wireless infrastructure.
- **Limited Power supply:** Another constraining factor is that mobile devices ("mobile") in a wireless network are usually powered by batteries whose limited lifetimes make them targets of a class of attacks that simply drain their power by making the mobile perform redundant power consuming activities. This by itself can render the mobile inoperable.
- **Multi-targeted:** In a wireless DoS attack, the attacker has more flexibility because both the infrastructure as well as mobiles can be easily attacked. The same attack can now target multiple mobiles, either by attacking each mobile individually, or by targeting the wireless infrastructure for a more widespread effect. Furthermore, new architectures such as 1xEV-DO with its always-on capability increases the probability of an attack.

An attacker launching a wireless-specific DoS attack can easily exploit these vulnerabilities.

Another by-product of a wireless attack is that once the attack reaches a mobile it is too late. In a wireline DoS attack, it takes a certain amount of time for a server to be disabled because such machines have a larger processing capacity than a wireless endpoint (mobile). In contrast, a mobile has limited processing and battery lifetime. In addition, a wireless link is severely bandwidth-constrained when compared to a wireline network. If the traffic from an attack reaches a mobile, the attack has already succeeded in wasting critical resources of the wireless link, the wireless infrastructure, and the battery power of the mobile. This is in contrast to typical wireline DoS attacks that must overload processing resources at a server in order to succeed.

It is desirable, therefore, to provide methods and devices for detecting, preventing and defending against 3G wireless network DoS-like attacks. More particularly, it is desirable to provide methods and devices for detecting, preventing and defending against wireless DoS-like attacks launched against UMTS, CDMA2000 and other 3G wireless networks.

The article entitled "Countering Denial-of-Service Attacks Using Congestion Triggered Packet Sampling and Filtering", authored by Huang et al. Computer Communications and Networks 2001, Proceedings. Tenth International Conference on 15-17 Oct 2001, Piscataway, NJ, USA, IEEE 15 October 2001, pages 490-494, XP010562136, discusses a countermeasure that can be used against Denial-of-Service attacks.

U.S. Patent Application Publication No. 2003/0217283 to Hrastar et al. discusses a method and system for encrypted network management and intrusion detection.

### Summary of the Invention

Methods and apparatus according to the present invention are set out in the independent claims, to which the reader is now referred. Preferred features are laid out in the dependent claims.

### BRIEF DESCRIPTION OF THE DRAWINGS

FIG. 1 depicts an example of a UMTS wireless network architecture.

FIG. 2 depicts an example of a message flow associated with the UMTS wireless network of FIG. 1.

FIGs. 3a and 3b depict exemplary simulations of a possible impact of a signaling attack.

FIG. 4 depicts exemplary steps in setting up a fundamental channel in a 3Glx wireless network.

FIG. 5 depicts an example of a 3Glx wireless network architecture.

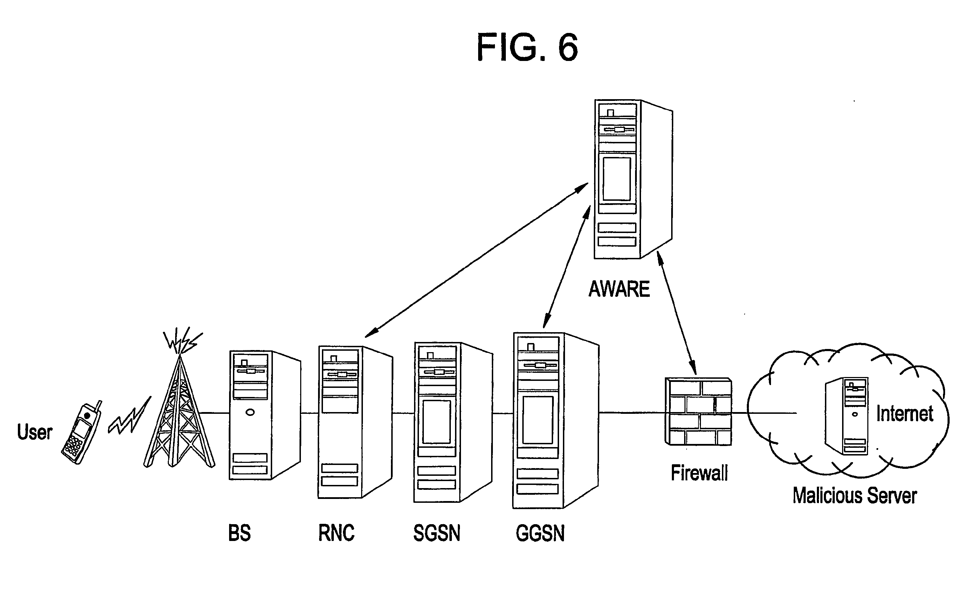

FIG. 6 depicts an example of an architecture for detecting and preventing signaling attacks according to one embodiment of the present invention.

### DETAILED DESCRIPTION OF THE INVENTION, WITH EXAMPLES

A 3G wireless network requires the establishment (i.e., set-up) of a dedicated channel between a mobile and the associated wireless infrastructure for data to be transmitted. In order to set up the channel, signaling messages need to be transmitted between the mobile and elements of the wireless infrastructure. Signaling attacks seek to exploit the nature of this signaling to overload the wireless infrastructure.

### Signaling attacks in UMTS networks

First, we begin with a brief introduction of the UMTS architecture. Then, we present an overview of the signaling required to set up a data channel and the vulnerability of a UMTS network to signaling attacks.

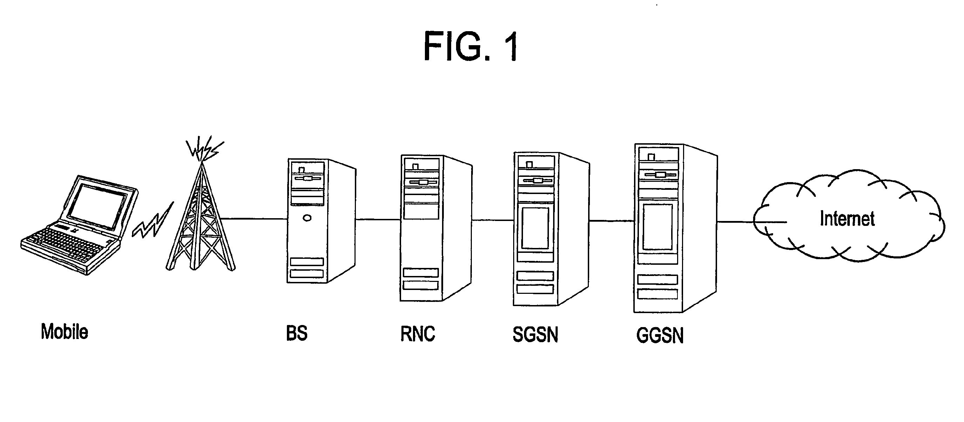

FIG. 1 shows the typical architecture of a UMTS wireless network. There are several components, beginning with the Gateway GPRS Support Node (GGSN) which is a GPRS network entity that serves as a wireless gateway between a Serving GPRS Support Node (SGSN) and the Internet. Additionally, the GGSN interfaces with authentication servers on external networks as well as DHCP servers for dynamic address allocation. When a mobile or user successfully authenticates and registers with the network, a Point-to-Point (PPP) link is set up between the GGSN and the mobile.

The SGSN is responsible for sending data to and from mobile stations, in addition to maintaining information about the location and authentication of a mobile. Typically, there are multiple SGSNs, each of which serves the GPRS users physically located in their serving area.

A Radio Network Controller (RNC), also known as a Base Station Controller (BSC) is the point where wireless link layer protocols terminate. The RNC provides an interface between wireless devices communicating through Base Stations (BS) and the network edge. This includes controlling and managing the radio transceivers in BS equipment, including radio resource control, admission control, channel allocation, as well as management tasks like handoff between BS's and deciding power control parameters. The BS functionality includes wireless link transmission/reception, modulation/demodulation, physical channel coding, error handling, and power control. In this hierarchical architecture, multiple mobiles communicate with a BS, multiple BS's communicate with an RNC, and multiple RNC's talk to the GGSN/SGSN.

The UMTS signaling control flow for setting up channels for resource allocation is now described. Essentially, when data arrives for a subscriber, a UMTS RNC needs to establish a radio access bearer (RAB) with the base station of the subscriber. The RAB is a channel for data transfer and is released after a timeout period for inactivity. For establishing and releasing an RAB, a significant number of messages are exchanged between an RNC, mobile and base station. This is a significant amount of overhead for the RNC and causes severe processing overhead during signaling time intervals.

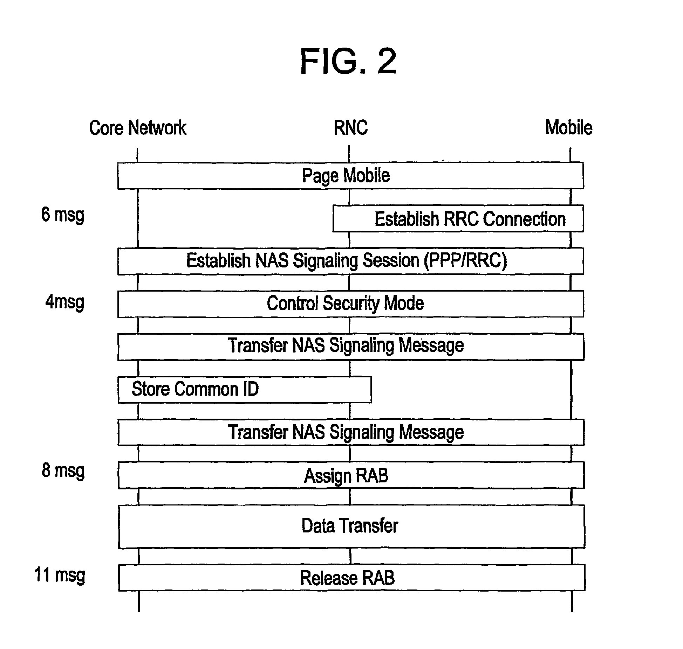

An example of a message flow between an RNC, base station(s) and a mobile is shown in FIG. 2. Essentially, for every data call, a number of messages are exchanged between a mobile and an RNC. While the RNC is not the termination point for some of these messages (designated as Non Access Stratum or NAS messages), the RNC is required to forward these messages to the final destination in the core network (e.g., PDSN).

### Radio Resource Control (RRC) Messages

RRC-like messages are used to establish/release radio channels for mobile power measurements, to transport paging messages and to broadcast information. An RRC setup leads to the creation of a dedicated signaling channel, which is the first step in enabling data transmission to/from a mobile. This requires 6 messages exchanged between the RNC and the mobile. Following this, there is a series of messages exchanged between the mobile and the core network for the purposes of authentication, and establishment of context, including a PPP connection with a PDSN, and assignment of an IP address. A further 4 messages are exchanged between the RNC, the core network and the mobile for a control security mode which results in the exchange of ciphers to secure the context for a given subscriber. Finally, an RAB is set up requiring an additional 8 messages exchanged at the RNC (2 with a core network, 3 with a mobile and 3 with a base station), resulting in a total of 24 messages to establish a single RAB with the RNC (not including messages exchanged between different elements within the RNC). It should be noted that subsequent RAB establishments do not need to perform an RRC signaling channel setup, though use of a control security mode may be required to re-authenticate a mobile.

Depending on the location of a mobile, a so-called soft handoff requires adding "legs" or base stations to the primary node with which the mobile has the strongest signal. This requires an additional 4 messages exchanged at the RNC (2 with the mobile and 2 with the primary base station). Finally, after a transfer, a mobile can initiate a teardown of RAB and RRC connections. This is initiated by an IU release function. This requires a total of 11 messages exchanged at the RNC (2 with the core network, 4 with the mobile and 5 with the base station). This number again does not include intra-RNC processing messages that contribute to the overall load at the RNC.

If there is no data exchanged between a mobile and its core network, the mobile is placed in a suspended state. In such a state, air link resources are released and assigned to other active mobiles, which requires 4 messages (2 with its core network and 2 with a base station). However, the context is still maintained at the RNC, and the mobile retains its IP address obtained during RRC/RAB establishment. A mobile can be reactivated (2 messages exchanged with RNC) using a packet call context resumption message (additional 2 messages with its core network) as long as an idle timeout period of 5 seconds has not occurred.

### Vulnerability and Nature of the Attack

An attacker exploits the heavy-duty signaling overhead required for setup of RABs by essentially triggering an excessive signaling message exchange between the RNC and BS. This may be achieved by sending a low volume burst at appropriately timed periods so that immediately after an RAB is torn down due to inactivity, a burst arrives from an attacker to trigger an establishment of a new RAB. This frequent setup/release can easily overload the RNC by requiring an excessive amount of signaling messages.

It should be noted that it is relatively easy for an attacker to obtain the IP addresses of mobiles. Wireless service providers typically assign chunks of contiguous IP addresses making it easy for an attacker to guess a valid range of addresses simply by posing as a valid subscriber.

Two salient features of an attack are worthy of note. First, as noted before, the low average transmission rate of the attack (small bursts are sent periodically), make it hard for any existing detection mechanism to classify the traffic as malicious. The low volume also makes it easier for an attacker to launch an attack as opposed to conventional DDoS attacks requiring the attacker to compromise thousands of hosts in order to even launch an attack. Furthermore, only one packet needs to be sent per mobile allowing the attacker to have a widespread, diffused impact further complicating detection.

### Damage Due to the Attack

The damage due to such an attack may be so severe that valid traffic may not receive an allocation of resources causing it to be dropped by an RNC. The RNC can also become overloaded, effectively denying service to a significant number of subscribers. In addition, RNC's are engineered to handle a certain amount of simultaneously active mobiles/users (in practice, 10%). It is easy for an attacker to exceed this number due to the low-volume nature of an attack.

Another side effect of a signaling attack is the potential for draining a mobile's battery. Normally, to conserve power, a mobile switches to a low-power idle or dormant state when there are no packets being sent or received. Because low volume bursts are sent periodically, mobiles would be forced to stay active longer than necessary. In a worst case scenario, a mobile may never be allowed to enter a dormant state causing rapid draining of its battery.

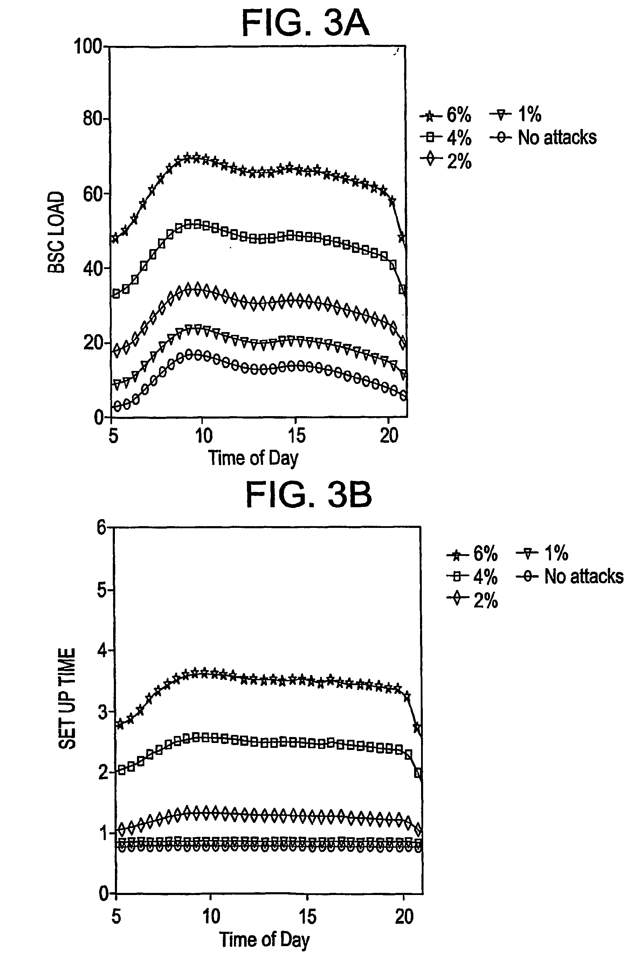

The present inventors performed simulations of the impact of an attack; some of the results are given by the graphs in FIGs. 3a and 3b. FIG. 3a plots a Base Station Controller's load versus time of day for a series of attacks, while FIG. 3b plots call set-up delay time (i.e., delay experienced after a call arrives until the time resources are allocated) versus time of day.

The results from FIGs. 3a and 3b demonstrate the drastic effect of an attack. Simply by sending 6% attack traffic, the load at an RNC may be increased by a factor of 5 from a utilization of 15% to 75%. This also translates into a 5-fold increase in call setup delay, which further erodes consumer confidence, especially for providers touting real-time services. It is relatively easy to overload an RNC simply by sending around 10% attack traffic.

Changing gears, the following is a brief description of the 3Glx architecture (e.g., CDMA2000) and signaling.

### 3G1x Architecture

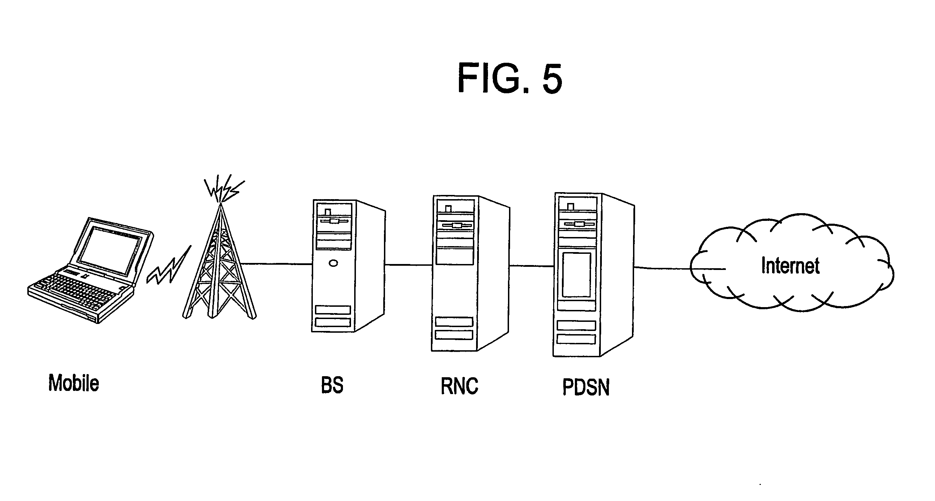

FIG. 5 depicts a typical architecture for a 3Glx wireless network. The PDSN may be a router, which functions as a gateway for data flow to and from all user mobiles/terminals in the entire wireless network. When a mobile or user successfully authenticates and registers with the network, a PPP link is set up between the GGSN and the user/mobile. On the path to the PDSN, there are three devices that are typically part of a wireless infrastructure. The RNC and the BS have functionality identical to their counterparts in UMTS. In this hierarchical architecture, multiple mobiles communicate with a base station, multiple base stations communicate with an RNC, and multiple RNCs talk to the PDSN.

### 3G1x Signaling

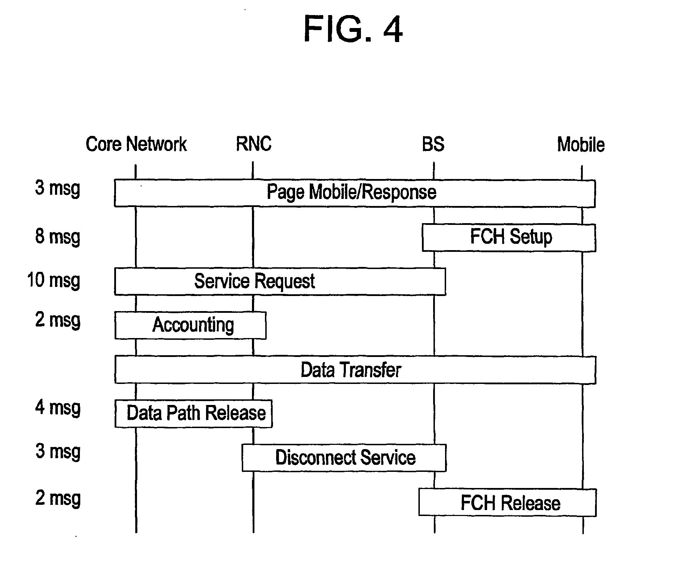

In a 3Glx network, there is an analogous problem for resource allocation. The equivalent of an RAB in UMTS networks is the fundamental channel (FCH) that needs to be setup to transfer data. Typical steps used to set-up an FCH are shown in FIG. 4.

When a PDSN receives data for a mobile, it pages the mobile. Once a successful response to a paging message has been received (3 messages exchanged), a base station initiates the setup of a FCH or Traffic Channel with the mobile (exchanging 8 messages). In parallel, a service request is made between the base station and an RNC requiring 4 messages. The RNC is also expected to forward messages to the core network, which in this case is required to authenticate the user. This results in an additional 6 messages. Finally, 2 additional messages are exchanged between the RNC and the PDSN for accounting purposes. Once this is done, an active channel exists for transmitting data to and from the mobile.

Call release(s) follow the reverse procedure and require 7 messages from the RNC to the PDSN and base station, 8 messages between the base station and the RNC, PDSN and mobile. Overall, 29 messages are generated or received by the BS and 13 messages by the RNC in addition to 9 more messages that the RNC is responsible for forwarding to the core network.

Every subscriber typically has an primary leg assigned, which originally acts as the forwarding base station when a call is first setup. In certain cases, an additional base-station, called an anchor leg, is established for long-lived connections. This leg could be distinct from the primary leg and is defined as the base station with the strongest signal to the mobile. The anchor leg takes charge of deciding when to allocate supplemental channels (SCH), which are used when there is insufficient capacity on a 9.6Kbps FCH.

If there is excess data in the form of bursts that exceed the capacity of the FCH, then resources are allocated on demand to create a SCH for each user. There are an additional 16 messages exchanged between the anchor leg, the RNC and other base stations (for soft handoffs) leading to a similar vulnerability of the anchor leg for supplemental channel allocation and release.

While an attack on the anchor leg potentially has less widespread damage than an attack on the RNC, the impact is still severe enough to lead to a significant loss of revenue to a wireless service provider. If an attacker can impact multiple anchor legs, then the damage is magnified even more. An attacker may even be able to target the subscribers that belong to a particular anchor leg.

It should be noted that if an attacker simply sends randomly addressed bursts the damage could still be severe. Even if a single anchor leg is not in charge of the subscribers that are receiving the bursts, the RNC can still be overloaded due to its interaction with multiple anchor legs.

To prevent and defend against an attack, the present inventors recognized that knowledge of so-called wireless states, in particular the signaling cost(s) as traffic traverses through a wireless network was needed. This allows malicious traffic to be identified as soon as it begins to introduce excessive signaling cost. Signaling cost can be obtained in various ways depending on the wireless infrastructure involved. Ideally, an exact signaling cost can be obtained by querying wireless elements, such as an RNC and base station, when these elements provide an interface for such queries. However, current 3G wireless networks do not have such an interface, thus requiring modifications in order to support such queries. Changing an existing infrastructure, however, is not a viable solution given the amount of investment already expended by network owners/operators.

The present inventors discovered a simple, yet novel mechanism of estimating the signaling cost from traffic arrival patterns assuming knowledge of signaling call(s). The present inventions provide for methods and devices for detecting an attack using the so estimated signaling cost.

As mentioned above, if a wireless element provides an interface for querying, the signaling cost can be obtained by a simple query. Absent that, the challenge is to obtain the cost without the assistance of such wireless elements. In one embodiment of the present invention, the signaling cost is estimated from traffic arrival patterns. This requires knowledge of the signaling protocols inside wireless elements. Table 1 shows an example of a technique for estimating signaling cost (due to RAB establish/release) in a UMTS network according to one embodiment of the present invention. Similar techniques within the scope of the present invention can be used to estimate other types of signaling costs for CDMA2000 networks according to alternative embodiments of the present invention.

**TABLE 1**

| | | |
|---|---|---|
| 1. LastArrival(*i*) = 0 | | |
| 2. while *true* do | | |
| | a. Packet arrives for user *i* OR user *i* sends a packet | |
| | b. IF (CurrentTime - LastArrival(*i*) > IdleTimeout) THEN | |
| | | i. Cost(*i*) += cost of RAB establishment |
| | | ii. Cost(*i*) += cost of RAB release |
| 3. LastArrival(*i*) = CurrentTime | | |

The present invention makes use of the fact that, upon arrival of a packet, if the destination's RAB has been released, the destination mobile has to reestablish the RAB. This reestablishment creates an added cost to establish a new RAB and release the previous RAB due to the expiration of an idle timer; a cost which can be detected by techniques provided by the present invention.

A reliable sign of an ongoing signaling attack is the detection of excessive or additional signaling costs even though the volume of actual, transmitted data is low. Before continuing, it should be noted that an attacker can flood a network using huge amounts of traffic that would also introduce excessive signaling costs. However, this can be, relatively speaking, easily detected by existing firewall or intrusion detection mechanisms. With a low-volume attack, there needs to be a more accurate metric for detection. In accordance with the present invention, a statistical measure referred to as a signaling cost to data ratio is used as a metric. If the ratio exceeds a certain profiled threshold, a signaling attack is detected and malicious traffic/packets from the source of the attack are blocked. In a further embodiment of the present invention, if multiple attacks from the same source are detected, malicious traffic/packets, etc. from the source of the attack is blocked while allowing traffic from other sources through, for example. Other intrusion detection mechanisms may also be used to reduce the chance of false alarms.

In accordance with an exemplary method of the present invention, the first step in determining if traffic is part of an attack is to define a threshold for later comparison. This should be user/application specific. The value of this threshold may be chosen by profiling user/applications during a pre-processing time period.

During such a time period, a profile for each user may be created based on a statistical signaling cost to data ratio. Information used in building the profile includes packet arrival times, IP addresses and port numbers of source(s) and destination(s).

One novel aspect of the profiling mechanism provided by the present invention is the ability to aggregate (user, application, as well as server) related profiles. By user profile, we refer to the statistics for an individual user. This division can be further categorized by individual application. For instance, web surfing is the most frequently used service by most users. Similarly, a video-on-demand server may use RTP packets to broadcast video to users. Statistics on an individual web server basis can also be compiled by logging the arrival of HTTP/RTP packets.

To enable scalability, the profiles can be aggregated across users with similar behaviors. Current traffic can then be compared to the aggregated profile to detect inconsistencies. Aggregated profiles can analogously be maintained for popular servers and also for popular applications. The flexibility of using different classification approaches allows a more comprehensive and accurate characterization of what is considered as normal traffic. This profile is key to detecting abnormal and malicious traffic, while also minimizing the probability of false positives (incorrect classification of valid traffic as malicious traffic).

**TABLE 2**

| | | |
|---|---|---|
| 1. Collect the signaling cost to data ratio | | |
| | a. Query: Actual number of signaling messages exchanged per user from wireless elements | |
| | b. Estimate: Infer signaling cost from packet arrivals | |
| 2. Detection: For packet(j) from sender s to user i: | | |
| | Metric: Signaling Cost to Data Ratio (S/D) | |
| | IF (S/D) > S/D_{THRESH}⁽ⁱ⁾ for user i, THEN | |
| | | ■ FLAG_{J}^{S}++; |
| | | ■ Start INVALID_{TIMER}(s) |
| 3. Verification: IF (FLAG_{J}^{S} > VOTE_{THRESH}(s) OR INVALID_{TIMER}= 0) THEN | | |
| | | ■ Install filter at firewall to block data to s |

Table 2 above sets forth an example of a method or algorithm for defending against a DoS Signaling attack. This method may be executed by a device or devices capable of either estimating or collecting user state statistical information (e.g., actual traffic flow) from the wireless infrastructure. In general this method operates as follows.

In an initial step, a current measure, such as a signaling cost to data ratio is generated or derived. This ratio can be obtained through either directly querying the infrastructure or by using an estimation technique.

Next, the signaling cost to data ratio is compared against a threshold, reference ratio. If the derived ratio exceeds the threshold for a user, i.e., S/D_{THRESH}, determined from a pre-processing step that builds a profile for the user, subsequent traffic from a sender "s" is flagged.

Lastly, if a sufficient number of packets (when compared to a threshold, VOTE_{THRESH}) have been flagged as suspicious from the sender s, OR the suspicious behavior lasts for an extended period of time (INVALID_{TIMER}), then a filter may be applied at a firewall to block future traffic from that sender.

It should be noted that the user profile generated during the pre-processing step is adaptable to user behavior in order to minimize false positives and accurately detect when a violation occurs. More specifically, after the initial profile is created during pre-processing, it may be updated regularly based on changes to a user's behavior.

The method utilized in Table 2 may be implemented in a number of different ways, one of which may be referred to as an Architecture for Wireless Attack REsistance (AWARE). AWARE-enabled devices may be modular and can support upgrades in order to counter future attacks.

In one embodiment of the present invention, an AWARE architecture (e.g., enabled device) may comprise two components: a *learning database* and *profiler*, and/or a *detection engine* or *detector*. The learning database is operable to capture and store information about a user during the pre-processing step. The profiler is operable to generate a traffic profile for a given user under normal (i.e., non-attack) conditions. The database and profiler may be one and the same and may be correlated with other user databases and profilers for cross-mobile correlation. The information in these databases is fed to a detector/detection engine. In one embodiment of the present invention, the detection engine is operable to maintain a threshold for each user and verify if current traffic for a user or set of users violates the corresponding threshold. Depending on the wireless elements that are capable of communicating with an AWARE-enabled device (one that contains a database, profiler and/or a detector), the location of the AWARE-enabled device may be varied:
- *Co-located with* a Firewall: An AWARE-enabled device can be co-located with a firewall of a wireless service provider. If such a design is chosen, then it is not necessarily assumed that any other part of the wireless infrastructure is aware of the presence of an AWARE-enabled device or interacts with the AWARE-enabled device.
   In an embodiment of the present invention, an AWARE-enabled device uses IP layer information such as packet arrivals and information from IP/TCP and application layer headers to build profiles. This assumes that the AWARE-enabled device can look inside a packet. If IPsec (tunnel mode) has been enabled, an AWARE-enabled device can be co-located with an IPsec gateway in the domain so as to be able to decrypt and inspect packet headers and payloads.
- *Between the PDSN* and an *RNC:* In an alternative embodiment of the present invention, an AWARE-enabled device may be placed between a PDSN and an RNC. In such a design, the device may interact with the PDSN, and obtain information as to how packets are distributed to different RNC's. An RNC provides finer grain information, such as: the number of signaling events for a FCH & SCH setup/release, the timestamp(s) of signaling messages, and power control information via a base station that estimates mobile power consumption. It should be understood that, in the event that an AWARE-enabled device is a stand-alone device, an AWARE-compatible interface may be needed to allow the device to operate with a wireless infrastructure (e.g., firewall).

In a "least-invasive" design, an AWARE-enabled device simply looks at IP packets that are passed on from a firewall before they reach the PDSN. All of the necessary information is contained in the application, TCP and IP headers and the payload itself. Information needed to build a profile can be extracted from the above headers and payload.

An AWARE-enabled device should be able to communicate with existing firewalls or IPsec gateways. Ideally, an AWARE-enabled device may be co-located at these entities acting as a filter to block suspected traffic. If a AWARE-enabled device is not co-located with the IPsec gateway, there needs to be a so-called security association with the gateway so it can decrypt and process ESP-encapsulated packets in a tunnel mode. Even if an AWARE-enabled device is not co-located with the firewall, there typically is an interface with most commercial firewalls such as Checkpoint's Firewall-1 that allows the configuration of filters.

If an AWARE-enabled device is placed between the PDSN and an RNC, more user-specific state information may be gathered (i.e., which RNC a user belongs to, and potentially other information that can be obtained from an RLP frame). Also, an AWARE-enabled device may obtain mobility related information because a mobile may cross over from one RNC to another. The impact of mobility information on the detection heuristic is worth analyzing, because highly mobile end-users can contribute significantly to the load of an infrastructure. Launching a wireless DoS attack against highly mobile users requires additional tasks, such as more frequent paging, that can add substantially to processing overhead. Also, a mobile may initiate a PPP connection with the PDSN before initiating a transfer. An AWARE-enabled device may also query the PDSN to obtain a PPP state history.

In addition to AWARE-enabled devices, the present inventors also recognized that an AWARE related architecture may also require additional devices.

For example, an AWARE-compatible interface is provided by the present invention. In one embodiment of the present invention, such an interface is operable to query wireless user/mobile state(s). Such an interface also allows an AWARE-enabled device (or devices) to communicate in a secure manner with the wireless infrastructure in order to obtain mobile/user-specific information. It should be noted that such an interface may be included as an option in infrastructures other than a PDSN, because at a minimum, packet arrivals need to be known in order to estimate state information.

In addition to an interface, the present invention provides for a plug-in detector.

Snort is an open-source IDS mechanism that emulates the functionality of an AWARE-enabled device. Snort is modular and allows new plug-ins to be installed, thus allowing the detection mechanism to be customized and enhanced for defense against current and future attacks. By "plug-in" is meant a generic term that refers to modules that can be added dynamically to alter the behavior of Snort.

In an additional embodiment of the present invention, a Snort compatible plug-in incorporating the detection heuristic functions of the present invention is provided.

Other plug-ins are also provided by the present invention. Again, during their experiments the present inventors utilized *Snortsam* to interface with a firewall and react to attacks.

In an additional embodiment of the present invention, a *Snortsam* compatible plug-in that allows such interfacing is provided by the present invention. Such a plug-in may be operable to act as filter(s) to block malicious traffic.

Alternatively, this plug-in may be interfaced with a wireless packet scheduler to reduce the priority of malicious traffic.

It should be understood that the methods of the present invention, the AWARE-enabled devices, interfaces, and any subcomponents (e.g., learning database, profiler, detector, etc.) may be realized in hardware, software, firmware or some combination of the three. For example, one or more programmable or programmed controllers, processors, etc. may be operable to store one or more programs or code (and data) that, in turn, is operable to carry out the features and functions of the present invention described above and in the claims that follow.

## Claims

1. A method for detecting an attack against a 3G wireless network **CHARACTERIZED BY**:
measuring a traffic level associated with a mobile device;
generating a cost-to-data ratio derived from the measured traffic level and a signaling cost estimated from radio access bearer traffic arrival patterns; and
comparing the generated ratio to a profiled, reference cost-to-data threshold ratio to determine whether a Denial-of-Service signaling attack is directed at the mobile device.

2. The method as in claim 1 further comprising preventing malicious traffic intended for the mobile device from reaching the mobile device when the generated ratio equals or exceeds the threshold reference ratio.

3. The method as in claim 1 wherein the network is selected from the group comprising a UMTS or CDMA2000 network.

4. The method as in claim 1 wherein the traffic level is a relatively low volume of data.

5. A method for detecting a denial-of-service (DoS) attack in a wireless network **CHARACTERIZED BY**:
(a) generating a statistical measure characterizing a relationship between a signaling cost estimated from radio access bearer traffic arrival patterns and actual data transmitted to or from at least one mobile device during normal operation of the wireless network;
(b) comparing the statistical measure to a current measure; and
(c) detecting a DoS attack if the current measure differs from the statistical measure by more than a threshold.

6. The method as in claim 5, wherein the statistical measure is based on a ratio of the signaling cost within a specified time interval to an amount of actual data transmitted to or from the at least one mobile within a specified time interval.

7. A 3G wireless network **CHARACTERIZED BY**:
one or more access nodes adapted to provide access between the wireless network and an Internet;
one or more radio network controllers (RNCs) adapted to communicate with the access node;
one or more base stations for each RNC adapted to communicate with an RNC and with one or more mobile units; and
an architecture adapted to:
(a) generate a statistical measure characterizing a relationship between signaling cost estimated from radio access bearer traffic arrival patterns and actual data transmitted to or from at least one mobile during normal operations of the wireless network;
(b) compare the statistical measure to a current measure; and
(c) detect a DoS attack if the current measure differs from the statistical measure by more than a threshold.

## Patentansprüche

1. Verfahren zum Erkennen eines Angriffs auf ein drahtloses 3G-Netzwerk, **GEKENNZEICHNET DURCH**:
Messen eines mit einer mobilen Vorrichtung assoziierten Verkehrsaufkommens;
Erzeugen eines von dem gemessenen Verkehrsaufkommen abgeleiteten Kosten-zu-Daten-Verhältnisses und von auf der Basis von Funkzugangsträger-Nerkehrsankunftsmustern geschätzten Signalisierungskosten; und
Vergleichen des erzeugten Verhältnisses mit einem profilierten Kosten-zu-Daten-Bezugsgrenzverhältnis, um zu ermitteln, ob ein Dienstverweigerungs-Signalisierungsangriff auf die mobile Vorrichtung gerichtet ist.

2. Verfahren nach Anspruch 1, weiterhin umfassend das Verhindern, dass für die mobile Vorrichtung bestimmter böswilliger Verkehr die mobile Vorrichtung erreicht, wenn das erzeugte Verhältnis dem Bezugsgrenzverhältnis entspricht oder dieses überschreitet.

3. Verfahren nach Anspruch 1, wobei das Netzwerk aus der Gruppe, welche ein UMTS- oder CDMA2000-Netzwerk umfasst, gewählt wird.

4. Verfahren nach Anspruch 1, wobei das Verkehrsaufkommen einer relativ niedrigen Datenmenge entspricht.

5. Verfahren zum Erkennen eines Dienstverweigerungs- bzw. DoS-Angriffs in einem drahtlosen Netzwerk, **GEKENNZEICHNET DURCH**:
(a) Erzeugen einer statistischen Messgröße, welche eine Beziehung zwischen ausgehend von Funkzugangsträger-/Verkehrsankunftsmustern geschätzten Signalisierungskosten und effektiv an die mindestens eine mobile Vorrichtung oder von der mindestens einen mobilen Vorrichtung während des normalen Betriebs des drahtlosen Netzwerks übertragenen Daten charakterisiert;
(b) Vergleichen der statistischen Messgröße mit einer aktuellen Messgröße; und
(c) Erkennen eines DoS-Angriffs, wenn sich die aktuelle Messgröße um mehr als einen Grenzwert von der statistischen Messgröße unterscheidet.

6. Verfahren nach Anspruch 5, wobei die statistische Messgröße auf einem Verhältnis der Signalisierungskosten innerhalb eines vorgegebenen Zeitintervalls zu einer Menge von aktuellen Daten, die innerhalb eines vorgegebenen Zeitintervalls an die mindestens eine mobile Vorrichtung oder von der mindestens einen mobilen Vorrichtung übertragen werden.

7. Drahtloses 3G-Netzwerk, **GEKENNZEICHNET DURCH**:
Einen oder mehrere Zugangsknoten, die für das Bereitstellen des Zugangs zwischen dem drahtlosen Netzwerk und einem Internet ausgelegt sind;
einen oder mehrere Funknetzwerk-Controller (RNCs), die für die Kommunikation mit dem Zugangsknoten ausgelegt sind;
eine oder mehrere Basisstationen für jeden RNC, die für die Kommunikation mit einem RNC und mit einer oder mehreren mobilen Einheiten ausgelegt sind; und
eine Architektur, ausgelegt für:
(a) Das Erzeugen eines statistischen Messgröße, welche eine Beziehung zwischen ausgehend von Funkzugangsträger-/Verkehrsankunftsmustern geschätzten Signalisierungskosten und effektiv an die mindestens eine mobile Vorrichtung oder von der mindestens einen mobilen Vorrichtung während des normalen Betriebs des drahtlosen Netzwerks übertragenen Daten charakterisiert;
(b) das Vergleichen der statistischen Messgröße mit einer aktuellen Messgröße; und
(c) das Erkennen eines DoS-Angriffs, wenn sich die aktuelle Messgröße um mehr als einen Grenzwert von der statistischen Messgröße unterscheidet.

## Revendications

1. Procédé de détection d'une attaque contre un réseau 3G sans fil, **CARACTERISE PAR** LES ETAPES SUIVANTES:
mesurer un niveau de trafic associé à un appareil mobile ;
générer un rapport coût/données dérivé du niveau de trafic mesuré et un coût de signalisation estimé à partir des modèles d'arrivée de trafic/support d'accès radio ; et
comparer le rapport généré à un rapport seuil coût/données profilé de référence, afin de déterminer si une attaque de signalisation par déni de service est dirigée vers l'appareil mobile.

2. Procédé selon la revendication 1 comprenant en outre le fait d'empêcher un trafic malveillant destiné à l'appareil mobile d'atteindre l'appareil mobile lorsque le rapport généré est égal ou supérieur au rapport seuil de référence.

3. Procédé selon la revendication 1, dans lequel le réseau est sélectionné à partir du groupe comprenant un réseau UMTS ou CDMA2000.

4. Procédé selon la revendication 1, dans lequel le niveau de trafic est un volume de données relativement faible.

5. Procédé de détection d'une attaque par déni de service (DoS) dans un réseau sans fil **CARACTERISE PAR** LES ETAPES SUIVANTES :
(a) générer une mesure statistique caractérisant une relation entre un coût de signalisation estimé à partir de modèles d'arrivée de trafic/support d'accès radio et de données réelles transmises vers ou depuis au moins un appareil mobile au cours du fonctionnement normal du réseau sans fil ;
(b) comparer la mesure statistique à une mesure actuelle ; et
(c) détecter une attaque par déni de service si la mesure actuelle diffère de la mesure statistique de plus d'un seuil.

6. Procédé selon la revendication 5, dans lequel la mesure statistique est basée sur un rapport du coût de signalisation au sein d'un intervalle de temps spécifié par rapport à une quantité de données réelles transmises vers ou depuis au moins un appareil mobile au sein d'un intervalle de temps spécifié.

7. Réseau 3G sans fil **CARACTERISE PAR** :
un ou plusieurs noeuds d'accès adaptés pour fournir un accès entre le réseau sans fil et un Internet ;
un ou plusieurs contrôleurs de réseau radio (RNC) adaptés pour communiquer avec le noeud d'accès ;
une ou plusieurs stations de base pour chaque RNC adaptées pour communiquer avec un RNC et une ou plusieurs unités mobiles ; et
une architecture adaptée pour :
(a) générer une mesure statistique caractérisant une relation entre un coût de signalisation estimé à partir de modèles d'arrivée de trafic/support d'accès radio et de données réelles transmises vers ou depuis au moins un appareil mobile au cours d'opérations normales du réseau sans fil ;
(b) comparer la mesure statistique à une mesure actuelle ; et
(c) détecter une attaque par déni de service si la mesure actuelle diffère de la mesure statistique de plus d'un seuil.
